**Europäisches Patentamt**

**European Patent Office**

**Office européen des brevets**

(11) Veröffentlichungsnummer: **0 268 007 B1**

## EUROPÄISCHE PATENTSCHRIFT

(45) Veröffentlichungstag der Patentschrift: **21.10.92**

(51) Int. Cl.⁵: **B60G 7/02**

(21) Anmeldenummer: **87105928.3**

(22) Anmeldetag: **23.04.87**

(54) **Vorrichtung zur Lagerung eines Führungslenkers für eine Radaufhängung eines Kraftfahrzeugs.**

(30) Priorität: **06.11.86 DE 3637920**

(43) Veröffentlichungstag der Anmeldung:
**25.05.88 Patentblatt 88/21**

(45) Bekanntmachung des Hinweises auf die
Patenterteilung:
**21.10.92 Patentblatt 92/43**

(84) Benannte Vertragsstaaten:
**DE ES FR GB IT NL SE**

(56) Entgegenhaltungen:
**EP-A- 0 193 847**
**GB-A- 753 813**
**US-A- 3 520 554**

(73) Patentinhaber: **Dr.Ing.h.c. F. Porsche Aktien-**
**gesellschaft**
**Porschestrasse 42**
**W-7000 Stuttgart 40(DE)**

(72) Erfinder: **Tschunko, Jan, Dipl.-Ing.**
**Lindenbachstrasse 71**
**W-7000 Stuttgart 31(DE)**
Erfinder: **König, Gerhard, Dipl.-Ing.**
**Hölderlinstrasse 17**
**W-7121 Löchgau(DE)**

## Beschreibung

Die Vorrichtung bezieht sich auf eine Vorrichtung zur Lagerung eines Führungslenkers für eine Radaufhängung eines Kraftfahrzeugs nach dem Oberbegriff des Anspruchs 1.

Aus der DE-A 34 41 560 ist ein stehendes Lenkerlager bekannt, das über einen das Lager untergriefenden Lagerbock gehalten und über eine Schraube mit diesem verbunden ist und in einer trägerseitig gehaltenen Schweißmutter befestigt wird. Das Lager ist im Abstand zum Träger am Lagerbock gehalten, wobei der verbleibende Zwischenraum von einem Endteil der elastischen Lagerhülse überbrückt wird, die sich am Träger abstützt. Bei dieser Ausführung ist zur Aufnahme von auf das Lager einwirkenden Kräften, eine bauaufwendige Lagerhalterung erforderlich, die zusätzlich zur Festsetzung über die Schraube am Träger den Lagerbock erfordert. Aufgrund des zu verbleibenden Zwischenraums ist die Halteschraube bei der Montage nicht auf Anschlag, sondern nur begrenzt einschraubbar, was ein Messen des zu verbleibenden Abstandes erforderlich macht. Es ist bei einer solchen bekannten Ausführung auch nachteilig, daß aufgrund der nicht starr begrenzten Einschraubtiefe das elastische Element leicht verspannt werden kann und eine gewünschte Lagerkennung nicht mehr gewährleistet ist.

Aus der US-A 35 20 554 ist eine Lagerung für ein Radführungsglied auf einem Bolzen bekannt, der mit einem Endbereich in zwei Wandungen eines Trägers abgestützt ist. Diese Lagerung entspricht dem Oberbegriff des Anspruchs 1. Der Bolzen wird im Träger zwischen einer endseitigen Befestigungsmutter und einem Bund festgespannt. Am aus dem Träger herausragenden Bolzenende ist eine elastische Lagerung für das Radführungsglied vorgesehen, wobei das Lager sich an einem Bund des Bolzens abstützen kann. Diese Befestigung des Bolzens im Träger bedingt eine genaue Lagerung der mit den Wandungen korrespondierenden Bolzenabschnitte, was nur in aufwendiger Weise herstellbar ist.

Der Erfindung liegt die Aufgabe zugrunde, eine Vorrichtung zur Lagerung eines Führungslenkers so zu gestalten, daß eine direkte Krafteinleitung in den Längsträger gewährleistet ist und das Lenkerlager in einfacher Weise von der Fahrzeugunterseite her montierbar wird.

Diese Aufgabe wird erfindungsgemäß durch die kennzeichnenden Merkmale des Anspruchs 1 gelöst. Weitere vorteilhafte Ausgestaltungen der Erfindung beinhalten die Unteransprüche.

Die mit der Erfindung hauptsächlich erzielten Vorteile bestehen darin, daß das Lager in einfacher Weise an den Stützarm ansetzbar bzw. auf den Stützarm steckbar ist. Es erfolgt ein Festsetzen über eine Schraube bzw. über eine Mutter ohne daß eine Verspannung des elastischen Elements und somit eine nachteilige Veränderung der Lagerkennung erfolgt, was aufgrund der zwischen dem Bund und dem Fangteller eingespannten Lagerbuchse möglich wird. Die Festlegung des Lagers über die Schraube am Träger erfolgt ohne Messungen, was nach dem Stand der Technik erforderlich sein dürfte, da ein Abstand zwischen dem Träger und dem Lager in bestimmter Weise eingehalten werden muß, um eine gewünschte Kennung des elastischen Elements zu gewährleisten.

Ferner ist es nach der Erfindung von Vorteil, daß auf das Lager einwirkende Kräfte über den Stützarm unmittelbar in den Längsträger der Aufbaustruktur des Fahrzeugs eingeleitet werden, wobei die zweifache Befestigung, einmal in der oberen Trägerwand und das andere Mal in der unteren Trägerwand eine relativ große Stützbasis ergibt und somit Quer- und Längskräfte optimal aufnehmbar und in den Träger einleitbar sind, ohne daß ein Verkippen des Lagers erfolgt.

Der Stützarm wird zur Befestigung im Träger von unten her in die Öffnungen gesteckt und stoffschlüssig in diesen Öffnungen befestigt. Damit bei einem Träger mit einer schräg verlaufenden unteren Wand eine in einer horizontalen Ebene liegenden Abstützung möglich wird, ist ein Lagerbock mit einer horizontalen Abstützfläche am Träger befestigt, die dann eine entsprechende Abstützung für den Bund des Stützarmes bildet.

Nach einer weiteren Ausführung der Erfindung weist der Bund des Stützarmes achsgleiche Längsnuten auf, in die korrespondierende Vorsprünge der Lagerbuchse eingreifen, sodaß in Lägsrichtung eine reibschlüssige und in Querrichtung eine formschlüssige Verbindung zwischen dem Stützarm und der Lagerbuchse geschaffen wird.

Ausführungsbeispiele der Erfindung sind in der Zeichnung dargestellt und werden im folgenden näher beschrieben.

Es zeigen:

Fig. 1 eine Seitenansicht eines Lenkerlagers mit Stützarm, sowie eine Haltemutter,

Fig. 2 eine weitere Ausführung der Erfindung mit einem Lenkerlager in der Seitenansicht im Schnitt, wobei der Stützarm eine Halteschraube aufweist,

Fig. 3 eine Vorderansicht eines Lenkerlagers mit einem Stützarm im Schnitt gemäß Fig. 2,

Fig. 4 einen Schnitt nach der Linie IV-IV der Fig. 2,

Fig. 5 eine Draufsicht auf einen Führungslenker mit dem Lenkerlager,

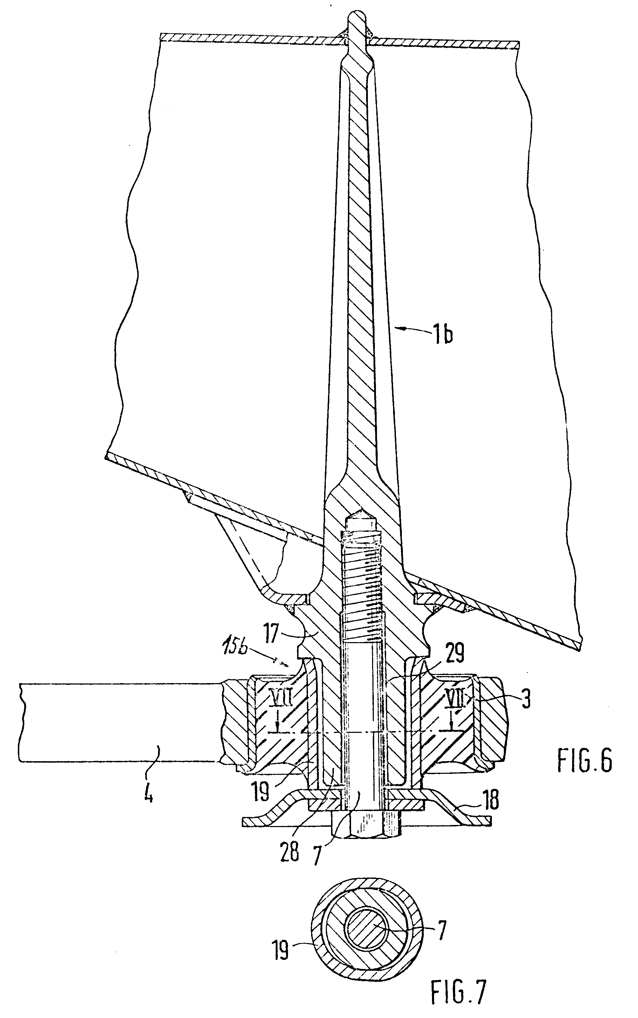

Fig. 6 eine weitere Ausführung eines Stützarmes,

Fig. 7 einen Schnitt nach der Linie VII-VII der Fig. 6 durch eine ovale Buchse des Lagers,

Fig. 8 eine Darstellung des elastischen Lagers im Schnitt und

Fig. 9 eine Draufsicht des Lagers gemäß Fig. 8 in Pfeilrichtung Z gesehen.

Die Vorrichtung zur Lagerung eines Führungslenkers umfaßt im wesentlichen einen Stützarm 1, der in einem Längsträger 2 befestigt ist und der endseitig unterhalb des Trägers 2 ein elastisches Lenkerlager 3 trägt. Dieses ist mit einem Radführungslenker 4 verbunden, der ein weiteres aufbauseitiges Lager 5 aufweist. Gegenüberliegend dieser Lager 3 und 5 ist das Rad an einem Radträger angelenkt, was nicht näher dargestellt ist.

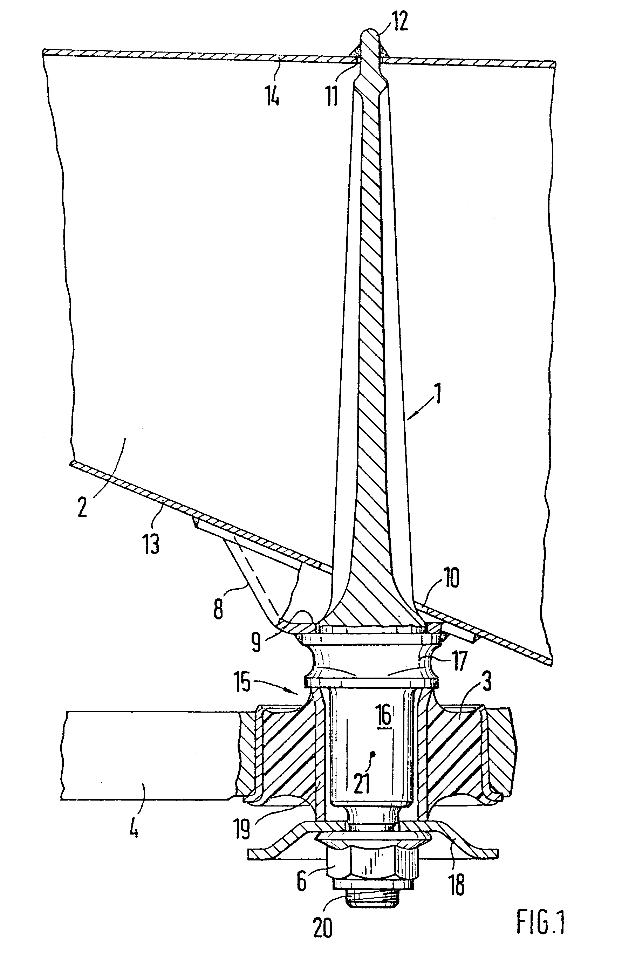

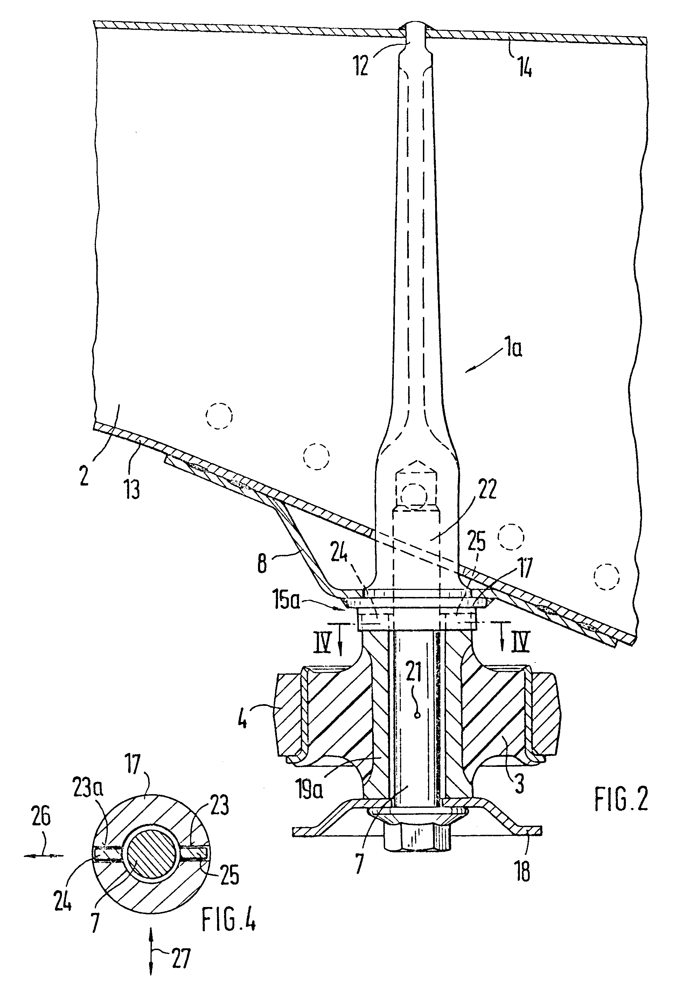

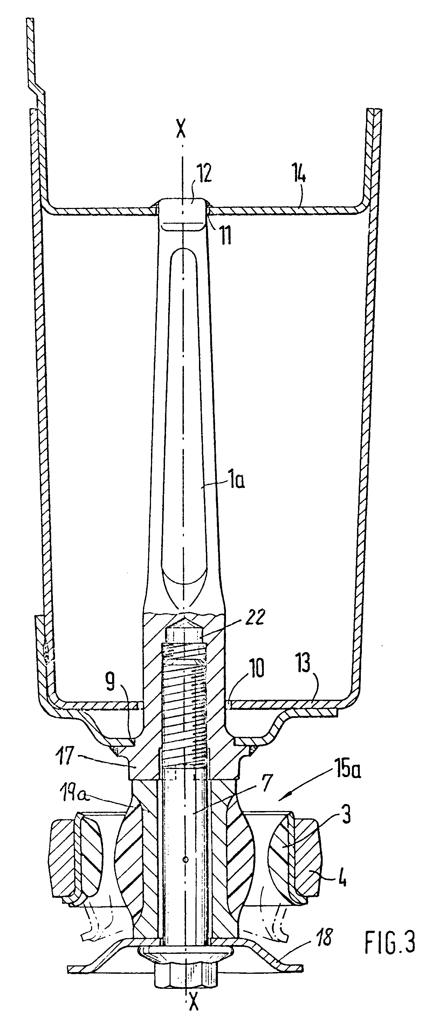

In Fig. 1 ist ein Ausführungsbeispiel eines Stützarmes 1 mit einer Haltemutter 6 dargestellt. In einem weiteren Ausführungsbeispiel der Fig. 2 und 3 ist der Stützarm 1a mit einem Gewindebolzen 7 versehen. Sowohl die Mutter 6 als auch der Bolzen 7 haben die gleiche Aufgabe, nämlich das Lenkerlager 3 am Träger 2 festzusetzen.

Der Stützarm 1; 1a; 1b erstreckt sich in einer vertikalen Ebene X-X durch den Träger 2 und ist an diesem und einem Lagerbock 8 stoffschlüssig befestigt.

Zur Montage wird der Stützarm 1; 1a; 1b durch eine Öffnung 9 in den Lagerbock 8 und durch eine weitere Öffnung 10 einer unteren Trägerwand 13 gesteckt und mit seinem oberen freien Ende 12 in eine Öffnung 11 der oberen Trägerwand 14 eingefädelt. Eine Verschißung des Stützarmes 1; 1a; 1b erfolgt an der oberen Trägerwand 14 sowie am Lagerbock 8.

Der Stützarm 1 weist an seinem freien unteren Ende 15 einen Lagerbolzen 16 auf, der einen sich am Lagerbock 8 abstützenden Haltebund 17 umfaßt.

Zwischen diesem Haltebund 17 und einem Fangteller 18 ist das Lenkerlager 3 auf dem Bolzen 16 angeordnet, wobei die Lagerbuchse 19 zwischen dem Bund 17 und dem Fangteller 18 eingespannt wird. Zum Befestigen dient die Mutter 6, welche endseitig des Bolzens 16 auf einem Gewindeteil 20 des Stützarmes 1 aufschraubbar ist.

Die Buchse 19 stützt sich unmittelbar am Bund 17 des Stutzarmes 1 ab und der Bund stützt sich wiederum unter Zwischenschaltung des Lagerbocks 8 am Träger 2 bzw. an der unteren und oberen Trägerwand 13, 14 ab, sodaß die auftretenden Längs- und Querkräfte aufgrund der relativ großen Befestigungsbasis kein Verkippen des Stützarmes 1; 1a; 1b bewirken können. Außerdem ist das Lagerzentrum 21 nahe zum Abstützort des Armes 1; 1a; 1b an den Lagerbock 8 gelegt.

Nach der weiteren Ausführungsform gemäß der Fig. 2 und 3 weist der Stützarm 1a an seinem unteren Ende 15a, das mit dem Bund 17 endet, eine Gewindebohrung 22 für den Gewindebolzen 7 auf. Auf diesem Bolzen 7 ist ein Fangteller 18 angeordnet, zwischen der und dem Bund 17 eine Lagerbuchse 19a des Lagers 3 eingespannt wird. Diese Buchse 19a stützt sich unmittelbar am Haltebund 17 ab und kann achsgleiche Längsnuten 23 und 23a umfassen (Fig. 2) in die entsprechende Vorsprünge 24, 25 der gegenüberstehenden Buchse 19a eingreifen und diese zum Stützarm 1a in Längsrichtung 26 reibschlüssig und in Querrichtung 27 formschlüssig halten.

Nach einer weiteren Ausführung des Stützarmes 1b, weist dieser an seinem freien Ende 15b einen über den Bund 17 vorragenden Lagerkern 28 auf, der das elastische Lager 3 aufnimmt. Im Lagerkern 28 ist eine bis über den und 17 reichende Sackbohrung 29 vorgesehen. Hierdurch wird es möglich eine gegen Korrosion geschützte Gewindeverbindung zu schaffen.

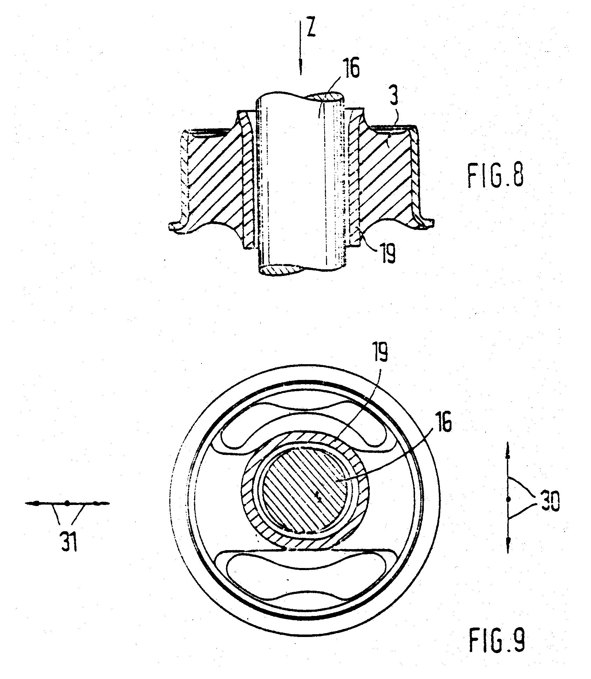

Das elastische Lager 3 kann eine ovale Buchse 19 aufweisen, die in Querrichtung 30 in Formschluß zum Bolzen 16 steht, dagegen in Längsrichtung 31 ein Spiel zum Bolzen 16 aufweist (Fig. 9). Hierdurch kann sich die Lagerbuchse 19 im Rahmen der Ovalität verschieben, wodurch Toleranzabweichungen ausgleichbar sind. Nach dem Anziehen der Mutter 6 wird die Lagerbuchse 19 in Längsrichtung 31 reibschlüssig gehalten.

Der Stützarm 1; 1a; 1b besteht vorzugsweise aus Metall, wie Stahl oder Aluminium, kann aber auch aus einem Kunststoff bestehen und weist eine sich zum oberen freien Ende 12 hin verjüngende Form auf.

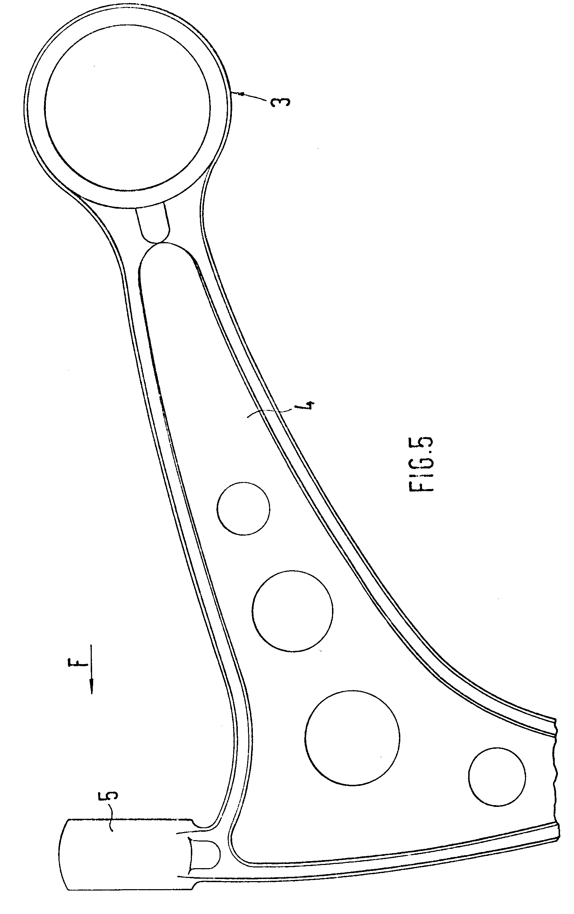

Wie Fig. 5 näher zeigt, besteht das Radführungsglied aus einem Dreieckslenker der ein- in Fahrtrichtung F gesehen- vorderes Lager 5 mit einer horizontalen Lagerachse aufweist, wogegen das hintere elastische Lager 3 eine vertikale Achse besitzt und so abgestimmt ist, daß kardanische Bewegungen möglich sind.

**Patentansprüche**

1. Vorrichtung zur Lagerung eines Führungslenkers für eine Radaufhängung eines Kraftfahrzeugs, bei der ein elastisches Lenkerlager (3) an einem Längsträger (2) der Aufbaustruktur über einen durchgeführten Stützarm (1; 1a; 1b) abgestützt ist, der an mit Abstand zueinander liegenden Wänden (13, 14) des Längsträgers (2) gehalten ist, wobei eine Stirnfläche des freien Endes (15; 15a; 15b) des Stützarmes (1; 1a; 1b) eine Abstützung für eine Buchse (19; 19a) des Lenkerlagers (13) unmittelbar zum Längsträger (2) bildet, **dadurch gekennzeichnet,** daß das elastische Lenkerlager (3) über die stehende Buchse (19; 19a) des Lenkerlagers (13) am freien unteren Ende (15; 15a;

15b) des sich in einer vertikalen Fahrzeugebene (X-X) durch den Längsträger erstreckenden Stützarmes (1; 1a; 1b) gehalten ist, der an einem Träger wand (2) bzw. an einem Lagerbock (8) des Trägers (2) befestigt ist.

2. Vorrichtung nach Anspruch 1, **dadurch gekennzeichnet,** daß der Stützarm (1) zur Aufnahme des Lagers (3) einen sich über die untere Trägerwand (13) vorragenden Lagerbolzen (16) umfaßt, der endseitig ein Gewindeteil (20) für eine Haltemutter (6) aufweist.

3. Vorrichtung nach Anspruch 1, **dadurch gekennzeichnet,** daß das freie untere Ende (15a) des Stützarmes (1a) eine Gewindebohrung (22) für einen das elastische Lager (3) am Arm (1a) haltenden Gewindebolzen (7) aufweist.

4. Vorrichtung nach einem oder mehreren der vorhergehenden Ansprüche, **dadurch gekennzeichnet,** daß der Stützarm (1; 1a; 1b) an dem freien unteren Ende (15; 15a; 15b) einen Haltebund (17) aufweist, der sich an einem mit dem Träger (2) verbundenen Lagerbock (8) abstützt und nahe einem Lagerzentrum (21) angeordnet ist.

5. Vorrichtung nach Anspruch 4, **dadurch gekennzeichnet,** daß der Haltebund (17) des Stützarmes (1b) einen sich in die Buchse (19) des elastischen Lagers (3) erstreckenden Lagerkern (28) aufweist, der mit einer bis in den Bund (17) geführten Bohrung (29) versehen ist.

6. Vorrichtung nach einem oder mehreren der vorhergehenden Ansprüche, **dadurch gekennzeichnet,** daß zwischen dem Bund (17) und einem sich an der Haltemutter (6) abstützenden Fangteller (18) der Lagerbuchse (19; 19a) reibschlüssig angeordnet ist.

7. Vorrichtung nach Anspruch 6, **dadurch gekennzeichnet,** daß die Lagerbuchse (19) eine ovale Form aufweist und in Querrichtung (30) am Lagerbolzen (16) formschlüssig anliegt und in Längsrichtung (31) zum Lagerbolzen (16) jeweils mit Spiel gehalten wird.

8. Vorrichtung nach einem oder mehreren der vorhergehenden Ansprüche, **dadurch gekennzeichnet,** daß in der stirnseitigen Anlagefläche des Bundes (17) sich radial erstreckende Nuten (23, 23a) angeordnet sind, in die axiale Vorsprünge (24, 25) der Buchse (19a) hineinragen.

9. Vorrichtung nach einem oder mehreren der vorhergehenden Ansprüche, **dadurch gekennzeichnet,** daß der Stützarm (1; 1a; 1b) eine sich von dem Bund (17) bis zum oberen Ende (12) hin verjüngende Form aufweist.

10. Vorrichtung nach einem oder mehreren der vorhergehenden Ansprüche, **dadurch gekennzeichnet,** daß der Stützarm (1; 1a; 1b) in der unteren und der oberen Wand (13 und 14) des Trägers (2) in Öffnungen (9, 10, 11) angeordnet ist und diese etwa in einer vertikalen Längsmittenebene (X-X) des Trägers (2) liegen, in die der Stützarm (1; 1a; 1b) in Montagerichtung von der Unterseite des Fahrzeuges her einsteckbar ist.

## Claims

1. A device for mounting a guide support arm for a wheel suspension of a motor vehicle, in which a resilient support-arm bearing (3) is supported on a longitudinal support (2) of the bodywork by way of a support arm (1; 1a; 1b) passed through and held on walls (13, 14) of the longitudinal support (2) arranged at a distance from each other, one end face of the free end (15; 15a; 15b) of the support arm (1; 1a; 1b) forming a support for a bush (19; 19a) of the support-arm bearing (13) [*sic; recte* 3] directly towards the longitudinal support (2), characterized in that the resilient supportarm bearing (3) is held by way of the stationary bush (19; 19a) of the support-arm bearing (13) on the free lower end (15; 15a; 15b) of the support arm (1; 1a; 1b) extending in a vertical plane (X-X) of the vehicle through the longitudinal support and secured on a support wall (2) or on a bearing block (8) of the support (2).

2. A device according to Claim 1, characterized in that in order to receive the bearing (3) the support arm (1) comprises a bearing pin (16) projecting beyond the lower support wall (13) and having a threaded part (20) at its end for a retaining nut (6).

3. A device according to Claim 1, characterized in that the free lower end (15a) of the support arm (1a) has a threaded bore (22) for a threaded pin (7) holding the resilient bearing (3) on the arm (1a).

4. A device according to one or more of the preceding Claims, characterized in that at its free lower end (15; 15a; 15b) the support arm (1; 1a; 1b) has a retaining collar (17) which is supported on a bearing block (8) connected to the support (2) and situated close to the centre (21) of the bearing.

5. A device according to Claim 4, characterized in that the retaining collar (17) of the support arm (1b) has a bearing core (28) extending into the bush (19) of the resilient bearing (3) and provided with a bore (29) continued as far as the collar (17).

6. A device according to one or more of the preceding Claims, characterized in that the bearing bush (19; 19a) is arranged with friction locking between the collar (17) and a catching plate (18) supported on the retaining nut (6).

7. A device according to Claim 6, characterized in that the bearing bush (19) has an oval shape and in the transverse direction (30) rests on bearing pins (16) with positive locking and in the longitudinal direction (31) is held with clearance in each case with respect to the bearing pin (16).

8. A device according to one or more of the preceding Claims, characterized in that radially extending grooves (23, 23a), into which axial projections (24, 25) of the bush (19a) project, are arranged in the end abutment face of the collar (17).

9. A device according to one or more of the preceding Claims, characterized in that the support arm (1; 1a; 1b) has a shape which tapers inwardly from the collar (17) as far as the upper end (12).

10. A device according to one or more of the preceding Claims, characterized in that the support arm (1; 1a; 1b) is arranged in openings (9, 10, 11) in the lower and the upper walls (13 and 14) of the support (2) and the said openings (9, 10, 11) are situated in a longitudinal median plane (X-X) of the support (2) into which the support arm (1; 1a; 1b) can be inserted in the direction of assembly from the underside of the vehicle.

**Revendications**

1. Dispositif pour le montage d'un bras de suspension d'une roue de véhicule automobile dans lequel un palier élastique (3) prend appui contre un longeron (2) de la structure de la carrosserie, par un bras d'appui (1 ; 1a ; 1b) traversant qui est maintenu sur des parois (13, 14), espacées l'une de l'autre, du longeron (2), une face frontale de l'extrémité libre (15 ; 15a ;

15b) du bras d'appui (1 ; 1a ; 1b) formant un appui pour un coussinet (19 ; 19a) du palier (13) de l'arbre, directement par rapport au longeron (2), caractérisé en ce que le palier (3) élastique est maintenu, par l'intermédiaire du coussinet (19 ; 19a) fixe du palier (13) de l'arbre, contre l'extrémité inférieure (15 ; 15a ; 15b) libre du bras d'appui (1 ; 1a ; 1b), s'étendant à travers le longeron dans un plan vertical (X-X), et qui est fixé sur une paroi (2) ou un support (8) du longeron (2).

2. Dispositif selon la revendication 1, caractérisé en ce que le bras d'appui (1) comporte, pour loger le palier (3), un axe (16) dépassant de la paroi inférieure (13) du longeron et qui présente à son extrémité, une partie filetée pour un écrou de maintien (6).

3. Dispositif selon la revendication 1, caractérisé en ce que l'extrémité inférieure (15a) libre du bras d'appui (1a) présente un trou taraudé (22) pour un boulon (7) maintenant le palier (3) élastique contre le bras (1a).

4. Dispositif selon une ou plusieurs des revendications précédentes, caractérisé en ce que le bras d'appui (1 ; 1a ; 1b) présente, à l'extrémité libre inférieure (15 ; 15a ; 15b) un épaulement de maintien (17) qui prend appui contre un support (8) relié au longeron (2), et qui est placé à proximité d'un centre (21) de palier.

5. Dispositif selon la revendication 4, caractérisé en ce que l'épaulement de maintien (17) du bras d'appui (1b) présente un noyau de palier (28) s'étendant dans le coussinet (19) du palier (3) élastique, lequel noyau est pourvu d'un alésage (29) s'étendant jusque dans l'épaulement (17).

6. Dispositif selon une ou plusieurs des revendications précédentes, caractérisé en ce qu'il est placé, par friction, entre l'épaulement (17) et un disque de positionnement (18), prenant appui contre l'écrou de maintien (6), du coussinet (19 ; 19a).

7. Dispositif selon la revendication 6, caractérisé en ce que le coussinet (19) présente une forme ovale et s'applique par concordance de forme, dans la direction transversale (30), contre l'axe (16) du palier et est maintenu dans la direction longitudinale (31), avec un certain jeu par rapport à l'axe (16).

8. Dispositif selon une ou plusieurs des revendications précédentes, caractérisé en ce que

EP 0 268 007 B1

dans la surface d'application frontale de l'épaulement (17) sont pratiquées des rainures (23, 23a), s'étendant radialement, dans lesquelles s'engagent les parties saillantes axiales (24, 25) du coussinet (19a)

9. Dispositif selon une ou plusieurs des revendications précédentes, caractérisé en ce que le bras d'appui (1 ; 1a ; 1b) présente une forme se rétrécissant depuis l'épaulement (17) jusqu'à l'extrémité supérieure (12).

10. Dispositif selon une ou plusieurs des revendications précédentes, caractérisé en ce que le bras d'appui (1 ; 1a ; 1b) est placé dans la paroi inférieure (13) et la paroi supérieure (14) du longeron (2), dans des ouvertures (9, 10, 11) et en ce que celles-ci se situent à peu près dans un plan médian longitudinal (X-X) vertical du longeron (2), ouvertures dans lesquelles le bras d'appui (1 ; 1a ; 1b) peut être inséré, dans la direction du montage, à partir du dessous du véhicule.

FIG.1

FIG.2

FIG.4

FIG.3

FIG.5

FIG.6

FIG.7

FIG.8

FIG.9